# EUROPEAN PATENT SPECIFICATION

(11) **EP 1 927 791 B1**
(45) Date of publication and mention of the grant of the patent: **08.08.2012**
(21) Application number: 07254519.7
(22) Date of filing: 20.11.2007
(51) Int. Cl.: F16H 63/06, F16H 57/04, F16H 55/56, F16H 9/18

(54) **Bell-type continuously transmission and straddle-type vehicle including the same**
Stufenloses Riemengetriebe und damit ausgerüstetes Grätschsitz-Fahrzeug
Transmission à variation continue à courroie et véhicule du type à selle comprenant celle-ci

(30) Priority: 29.11.2006 JP 2006322066; 26.01.2007 JP 2007016490
(43) Date of publication of application: 04.06.2008
(73) Proprietor: Yamaha Hatsudoki Kabushiki Kaisha, Iwata-shi, Shizuoka 438-8501 (JP)
(72) Inventor: Murayama, Takuji c/o Yamaha Hatsudoki Kabushiki Kaisha, Iwata-shi Shizuoka-ken 438-8501 (JP); Ishida, Yousuke c/o Yamaha Hatsudoki Kabushiki Kaisha, Iwata-shi Shizuoka-ken 438-8501 (JP)
(74) Representative: Schoppe, Fritz

(56) References cited:
- EP-A- 0 730 108
- EP-A- 1 143 170
- WO-A-00/65252
- JP-A- 1 040 760
- JP-A- 61 171 947
- US-A1- 2005 090 341

## Description

### BACKGROUND

The present invention relates to a belt-type continuously variable transmission and a straddle-type vehicle including the belt-type continuously variable transmission.

Currently, a straddle-type vehicle including a belt-type continuously variable transmission is known. This belt-type continuously variable transmission has a primary sheave which receives driving force from an engine, and a secondary sheave which receives the driving force from the primary sheave via a belt. At least either the primary sheave or the secondary sheave has a variable belt winding diameter, and the speed change ratio is controlled by varying the ratio of the belt winding diameter of the primary sheave to the belt winding diameter of the secondary sheave.

More specifically, the primary sheave typically includes a fixed sheave member (hereinafter referred to as "primary fixed sheave member"), and a movable sheave member (hereinafter referred to as "primary movable sheave member") disposed opposed to the primary fixed sheave member. The primary fixed sheave member and the primary movable sheave member form a substantially V-shaped belt groove in the cross-sectional view to which a belt is wound. The primary movable sheave member is movable in the rotational axis direction to change its position from the primary fixed sheave member. (That is, the primary movable sheave member can move closer to or away from the primary fixed sheave member.)

The primary sheave has a cam plate disposed opposed to the side of the primary movable sheave member opposite to the side facing the primary fixed sheave member. The cam plate is so constructed as not to change its position in the axial direction from the primary fixed sheave member. The primary movable sheave member has a plurality of guide ribs extending toward the cam plate. The cam plate has guide grooves with which the guide ribs engage to slide in the guide grooves. This engagement between the guide ribs and guide grooves prevents rotation of the primary movable sheave member relative to the cam plate, and allows the primary movable sheave member to be slidingly guided in the axial direction.

A plurality of roller weights movable in the radial direction of the primary sheave and capable of circulating with the rotations of the primary movable sheave member and the cam plate are provided between the primary sheave member and the cam plate. The primary movable sheave member has a plurality of stoppers extending toward the outer circumference of the cam plate. These stoppers determine the maximum shift positions of the roller weights toward the outside in the radial direction.

Similarly to the primary sheave, the secondary sheave includes a fixed sheave member (hereinafter referred to as "secondary fixed sheave member"), and a movable sheave member (hereinafter referred to as "secondary movable sheave member") disposed opposed to the secondary fixed sheave member. The secondary fixed sheave member and the secondary movable sheave member form a substantially V-shaped belt groove in the cross-sectional view to which the belt is wound. The secondary movable sheave member is urged by a spring in the direction where the width of the belt groove is narrowed (that is, the direction where the distance from the secondary fixed sheave member is decreased).

When the rotation speed of the primary sheave is low, the width of the belt groove of the secondary sheave is kept small by the urging force of the spring. Thus, the belt winding diameter of the secondary sheave becomes relatively large. In this condition, the belt is pulled toward the secondary sheave. By this pulling force, the roller weights are retained near the rotation axis, and the width of the belt groove of the primary sheave is kept relatively large. As a result, the speed change ratio increases.

When the rotation speed of the primary sheave increases, centrifugal force acting on the roller weights increases accordingly. Thus, the roller weights shift toward the outside in the radial direction while pressing the primary movable sheave member toward the primary fixed sheave member. As a result, the belt winding diameter of the primary sheave enlarges. With the enlargement of this diameter, the belt is pulled toward the primary sheave, and the belt winding diameter of the secondary sheave decreases. Thus, the rotation speed of the primary sheave, that is, the revolution of the engine increases, and the speed change ratio decreases. The speed change ratio becomes the minimum when the roller weights reach the maximum shift positions where the roller weights contact the stoppers, in which condition the width of the belt groove of the primary sheave becomes the minimum.

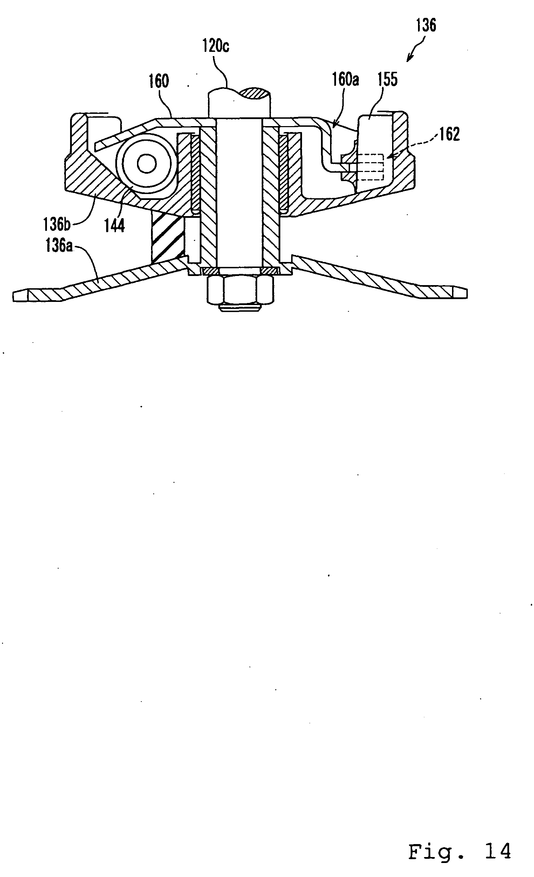

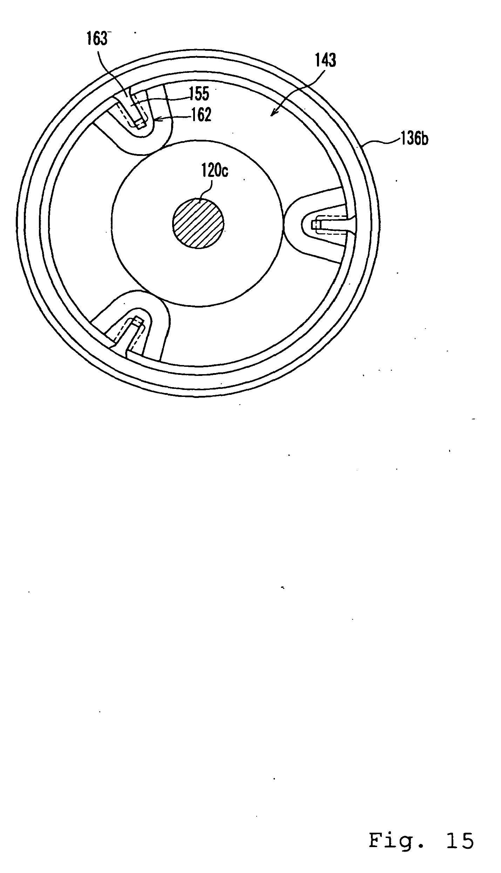

A structure of a primary sheave in related art is now described in more detail with reference to Figs. 14 and 15.

Fig. 14 is a cross-sectional view of a related-art primary sheave 136 disclosed in Japanese Patent No. 3,008,214. Fig. 15 is a plan view of the primary sheave 136 as viewed from a cam plate 160. The primary sheave 136 has a fixed sheave member 136a, a movable sheave member 136b, the cam plate (ramp plate) 160, and a roller weight (centrifugal weight) 144 provided between the movable sheave member 136b and the cam plate 160.

A plurality of guide ribs 155 extending in the radial direction are provided on the radially outer portion of the surface of the movable sheave member 136b on the cam plate 160 side at equal intervals in the circumferential direction of the primary sheave 136. Sliders 162 each of which has a sliding groove (guide groove) 163 with which the corresponding guide rib 155 slidingly engages are fitted to the cam plate 160. By engagement between the sliding grooves 163 of the sliders 162 and the guide ribs 155, rotation of the cam plate 160 relative to the movable sheave member 136b is prevented. When the cam plate 160 moves in the axial direction to change its position relative to the movable sheave member 136b, the cam plate 160 is guided in the axial direction of the primary sheave 136 by the sliding of the guide ribs 155 in the sliding grooves 163.

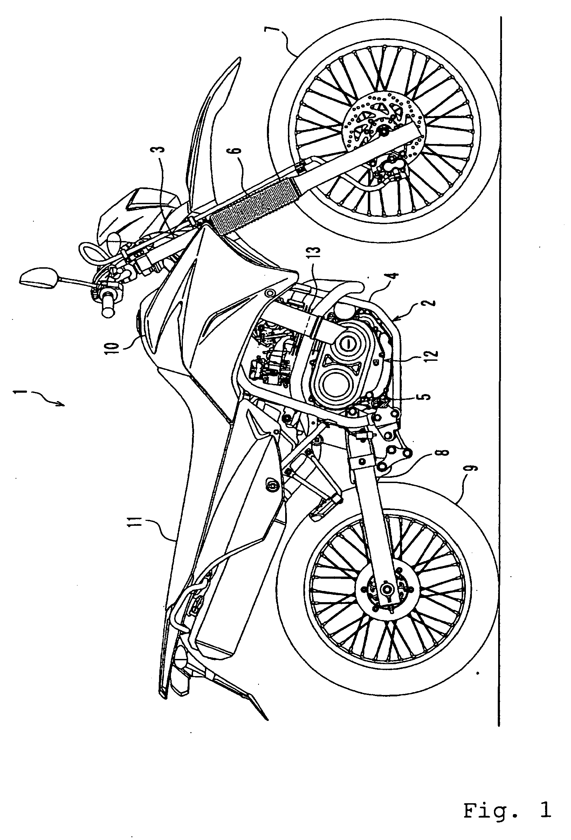

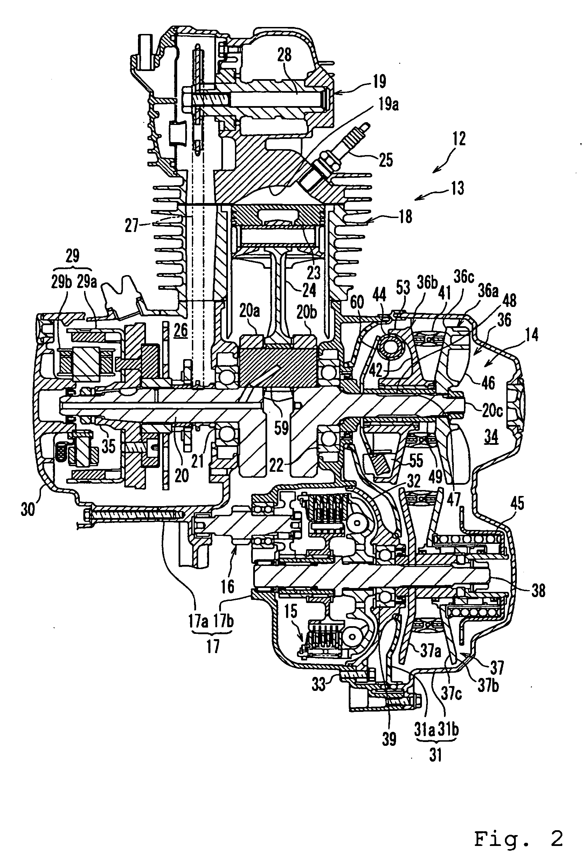

According to the technique in the related art illustrated in Figs. 14 and 15, each attachment portion 160a of the sliders 162 provided on the tapered cam plate 160 is formed by deep drawing to expand toward the movable sheave member 136b such that the direction of the slider 162 (opening direction of the sliding groove 163) crosses the sliding direction of the slider 162 (that is, the axial direction of the primary sheave 136) at right angles (see JP-A-2002-301525 (particularly Fig. 1) and Japanese Patent No. 3,238,303 (particularly Fig. 2) as well).

However, the processing of deep drawing on the cam plate 160 is extremely difficult. Thus, manufacture of the belt type continuously variable transmission becomes difficult.

The invention aims to provide a belt type continuously variable transmission which can be easily manufactured.

### SUMMARY

Aspects of the invention are defined in the claims.

A belt-type continuously variable transmission according to an aspect of the invention includes a primary sheave, a secondary sheave, and a belt. The belt is wound around the primary sheave and the secondary sheave. The primary sheave rotates around a rotation axis.

In an embodiment of the invention the primary sheave includes a first sheave member, a second sheave member, a cam plate, and a pressing member. The primary sheave can shift in the rotation axis extending direction. The second sheave member is disposed at a position shifted from the first sheave member toward one side of the rotation axis extending direction. The second sheave member is opposed to the first sheave member. The first sheave member and the second sheave member form a belt groove around which the belt is wound. The cam plate is disposed at a position shifted from the first sheave member toward the other side of the rotation axis extending direction. The cam plate is opposed to the first sheave member. The cam plate and the first sheave member produce a space which narrows toward the radially outside portion of the first sheave member. The pressing member is disposed in the space between the first sheave member and the cam plate. The pressing member circles around the rotation axis in accordance with the rotation of the first sheave member. The pressing member narrows the width of the belt groove by shifting toward the radially outside portion of the first sheave member while pressing the first sheave member against the second sheave member by centrifugal force generated during circling.

The first sheave member has a guide member. The guide member extends toward the cam plate. The cam plate has a slide member. The slide member has a guide groove engaging with the guide member such that the slide member can slide relative to the guide member. In an embodiment of a belt-type continuously variable transmission according to the invention, the position of the radially outer portion of the end surface of the slide member on the other side of the rotation axis extending direction is shifted toward the one side of the rotation axis extending direction from the position of the radially inner portion of the end surface of the slide member on the other side of the rotation axis extending direction.

A straddle-type vehicle according to an aspect of the invention includes such a belt-type continuously variable transmission.

The description "the portion of the plate main body opposed to the guide member is notched" herein includes not only the condition where a part of the plate main body is practically notched but also the condition where the portion of the plate main body opposed to the guide member has a notched shape produced for some reasons. Thus, the forming steps and forming method of the notch is not specifically limited. For example, the plate main body having a shape which includes a notched part opposed to the guide member may be formed by a single pressing step.

A belt-type continuously variable transmission provided according to the invention can be easily manufactured.

### BRIEF DESCRIPTION OF THE DRAWINGS

Embodiments of the invention are described hereinafter, by way of example only, with reference to the accompany drawings.
Fig. 1 is a side view of a motorcycle according to the invention.
Fig. 2 is a cross-sectional view of a structure of an engine unit.
Fig. 3 is a plan view of a primary movable sheave member to which a cam plate is attached as viewed from the center in the vehicle width direction.
Fig. 4 is a plan view of the primary sheave member as viewed from the center in the vehicle width direction.
Fig. 5 is a plan view of a plate main body as viewed from the primary movable sheave member.
Fig. 6 is a perspective view of the plate main body.
Fig. 7 is a plan view of the plate main body.
Fig. 8 is a view as viewed from a line VIII-VIII in Fig. 7.
Fig. 9 is a perspective view of a slider.
Fig. 10 is a side view of the slider.
Fig. 11 is a front view of the slider.

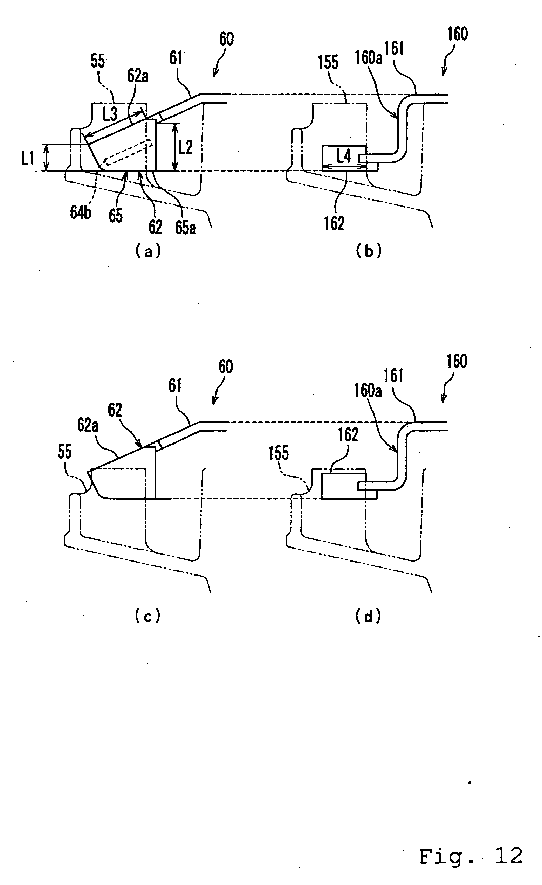

Fig. 12 schematically illustrates engaging condition between the cam plate and a guide rib. More specifically, Fig. 12(a) schematically illustrates an engagement between the cam plate and the guide rib according to the invention when the width of a guide groove is the maximum. Fig. 12(b) schematically illustrates an engagement between the cam plate and the guide rib in related art when the width of the guide groove is the maximum. Fig. 12(c) schematically illustrates an engagement between the cam plate and the guide rib according to the invention when the width of the guide groove is the minimum. Fig. 12(d) schematically illustrates an engagement between the cam plate and the guide rib in related art when the width of the guide groove is the minimum.
Fig. 13 is a side view of a slider in a modified example.
Fig. 14 is a cross-sectional view of a primary sheave in related art shown in Japanese Patent No. 008, 214.
Fig. 15 is a plan view of the primary sheave in the related art shown in Japanese Patent No. 008, 214 as viewed from a cam plate.

### DETAILED DESCRIPTION

According to the related art structure, the slider attachment portions 160a of the cam plate are formed by deep drawing such that the slider extending direction crosses the axial direction (shifting direction) at right angles as illustrated in Fig. 14 (see Figs. 12(b) and 12(d) as well), expecting smooth movement of the cam plate 160 in this structure. The present inventors found that the arrangement of the slider extending direction disposed orthogonal to the axial direction does not greatly relate to the smooth movement of the slider, and thus practiced this embodiment based on their finding.

A specific structure according to an embodiment of the invention is described in detail with reference to the drawings. In this embodiment, an off-road type motorcycle 1 shown in Fig. 1 is discussed as an example of a straddle-type vehicle to which the invention has been applied. However, the straddle-type vehicle according to the invention is not limited to this type of motorcycle, but may be a motorcycle of types other than the off-road type (such as motorcycle type, motor-scooter type, so-called moped type, and other types of motorcycle). The invention is also applicable to a straddle-type vehicle other than a motorcycle (such as ATV: all terrain vehicle).

Fig. 1 is a side view of the motorcycle 1 according to this embodiment. Initially, the general structure of the motorcycle 1 is described with reference to Fig. 1. It is assumed that the front-rear and left-right directions in the following descriptions are the front-rear and left-right directions as viewed from a rider sitting on a seat 11.

The motorcycle 1 has a body frame 2. The body frame 2 has a head pipe 3, a down tube 4 extending downward from the head pipe 3, and a seat pillar 5 extending from the head pipe 3 toward the rear. The lower end of the head pipe 3 is connected with a front wheel 7 via a front fork 6 and other components. A rear arm 8 extending toward the rear is supported in the vicinity of the lower end of the seat pillar 5. The rear end of the rear arm 8 is connected with a rear wheel 9. A cover 10 covering the body frame 2 is provided above the body frame 2. The seat 11 is disposed at a position slightly shifted toward the rear from the center of the cover 10.

An engine unit 12 supported by the down tube 4 and the seat pillar 5 is disposed between the down tube 4 and the seat pillar 5. As illustrated in Fig. 2, the engine unit 12 is formed by combining an engine 13, a belt-type continuously variable transmission (hereinafter referred to as "CVT (continuously variable transmission) ") 14 (see Fig. 2), a reduction mechanism 16, and other components into one piece. Driving force generated by the engine unit 12 is transmitted to the rear wheel 9 via power transmitting means (not shown) such as a chain belt. While the engine 13 is a four-stroke single-cylinder engine in this example, the engine 13 may be a two-stroke engine or multi-cylinder engine, for example.

The structure of the engine unit 12 is now explained with reference to Fig. 2. The engine unit 12 has the engine 13, the CVT 14, a centrifugal clutch 15, and the reduction mechanism 16. For simplifying the explanation, a part of the structure of the reduction mechanism 16 is not shown in Fig. 2.

The engine 13 has a crank case 17, a substantially cylindrical cylinder 18, and a cylinder head 19. The crank case 17 has two case blocks: a first case block 17a positioned on the left side and a second case block 17b disposed on the right side. The first case block 17a and the second case block 17b face each other in the vehicle width direction. The cylinder 18 is connected to a diagonally upper front portion of the crank case 17 (see Fig. 1 as well). The cylinder head 19 is connected with the end of the cylinder 18.

A crank shaft 20 horizontally extending in the vehicle width direction is accommodated in the crank case 17. The crank shaft 20 is supported by the first case block 17a and the second case block 17b via bearings 21 and 22.

A piston 23 is inserted into the cylinder 18 such that the piston 23 can slide therein. One end of a connecting rod 24 is connected with the piston 23 on the crank shaft 20 side. The other end of the connecting rod 24 is connected with a crank pin 59 disposed between a left crank arm 20a and a right crank arm 20b of the crank shaft 20. This structure allows the piston 23 to reciprocate within the cylinder 18 in accordance with the rotation of the crank shaft 20.

The cylinder head 19 has a concave 19a connecting with the inside space of the cylinder 18, and intake port and exhaust port (not shown) communicating with the concave 19a. An ignition plug 25 is inserted into the cylinder head 19 and fixed thereto such that the ignition area at the tip of the ignition plug 25 can be exposed in the concave 19a.

A cam chain chamber 26 connecting the interior of the crank case 17 and the interior of the cylinder head 19 is provided inside the left part of the cylinder 18. A timing chain 27 is disposed inside the cam chain chamber 26. The timing chain 27 is wound around the crank shaft 20 and the cam shaft 28. This structure allows the cam shaft 28 to rotate in accordance with the rotation of the crank shaft 20 so as to open and close not-shown intake valve and exhaust valve.

A dynamo case 30 accommodating a dynamo 29 is detachably attached to the left side of the front half of the first case block 17a. A transmission case 31 accommodating the CVT 14 is attached to the right side of the second case block 17b.

An opening is formed on the right side of the rear half of the second case block 17b. The opening is closed by a clutch cover 32. The clutch cover 32 is detachably fixed to the second case block 17b by a bolt 33.

The transmission case 31 is provided separately from the crank case 17. The transmission case 31 has an inside case 31a covering the inside (left side) of the CVT 14 in the vehicle width direction, and an outside case 31b covering the outside (right side) of the CVT 14 in the vehicle width direction. The inside case 31a is attached to the right side of the crank case 17. The outside case 31b is attached to the right side of the inside case 31a. A belt chamber 34 is sectioned by the outside case 31b and the inside case 31a.

The left end of the crank shaft 20 penetrates through the first case block 17a and reaches the inside of the dynamo case 30. The dynamo 29 is attached to the left end of the crank shaft 20. More specifically, the dynamo 29 has a stator 29b and a rotor 29a opposed to the stator 29b. The stator 29b is fixed to the dynamo case 30 in such a manner that rotation and shift of the stator 29b are prevented. The rotor 29a is fixed to a sleeve 35 rotating with the crank shaft 20 in such a manner that rotation of the rotor 29a is prevented. This structure allows the rotor 29a to rotate relative to the stator 29b in accordance with the rotation of the crank shaft 20 for power generation.

The CVT 14 is accommodated in the belt chamber 34. The CVT 14 has a primary sheave 36 and a secondary sheave 37 disposed behind the primary sheave 36. The crank shaft 20 penetrates through the second case block 17b and the inside case 31a and reaches the belt chamber 34. The right part of the crank shaft 20 (more accurately, the right part from the bearing 22) constitutes a primary sheave shaft 20c. The primary sheave 36 is supported by the primary sheave shaft 20c. This structure allows the primary sheave 36 to rotate with the rotation of the crank shaft 20.

A secondary sheave shaft 38 penetrating through the inside case 31a and the clutch cover 32 and reaches the inside of the crank case 17 is disposed in the rear half of the transmission case 31. The secondary sheave shaft 38 is attached to the clutch cover 32 via a bearing 39. The secondary sheave 37 is supported by the secondary sheave shaft 38 within the belt chamber 34.

A belt 41 (such as a (resin block) V belt) is wound around the secondary sheave 37 and the primary sheave 36. Thus, when the primary sheave 36 rotates with the crank shaft 20, the torque generated is transmitted to the secondary sheave 37 via the belt 41. Then, the secondary sheave shaft 38 comes to rotate with the secondary sheave 37. The rotation of the secondary sheave shaft 38 is transmitted to the rear wheel 9 via the centrifugal clutch 15, the reduction mechanism 16, and the power transmission means such as belt and chain (not shown).

The structure of the CVT 14 is now explained in more detail with reference to Fig. 2. As discussed above, the CVT 14 has the primary sheave 36, the secondary sheave 37, and the belt 41, and is accommodated in the belt chamber 34. The primary sheave 36 has a fixed sheave member 36a and a movable sheave member 36b each of which has a tapered shape. The fixed sheave member 36a is fixed to the right end of the primary sheave shaft 20c such that the fixed sheave member 36a extends toward the radially outside while approaching the outside (right side) in the vehicle width direction. The fixed sheave member 36a rotates with the primary sheave shaft 20c. On the other hand, the movable sheave member 36b is disposed at a position shifted toward the center (left side) from the position of the fixed sheave member 36a and opposed to the fixed sheave member 36a. The movable sheave member 36b extends toward the radially outside while approaching the inside (left side) in the vehicle width direction. A boss formed at the rotation center of the movable sheave member 36b is attached to the primary sheave shaft 20c via a collar 49. The movable sheave member 36b engages with a cam plate 60 attached to the primary sheave shaft 20c such that the cam plate 60 cannot rotate, and the rotation of the movable sheave body 36b is regulated by the cam plate 60. Thus, the movable sheave member 36b can slide in the axial direction of the primary sheave shaft 20c, but cannot rotate relative to the primary sheave shaft 20c. In this structure, a substantially V-shaped belt groove 36c in the cross-sectional view around which the belt 41 is wound is formed by the fixed sheave member 36a and the movable sheave member 36b, and the width of the belt groove 36c is varied by changing the position of the movable sheave member 36b relative to the fixed sheave member 36a.

A grease (lubricant) reservoir 47 is provided between the primary sheave shaft 20c and the collar 49. More specifically, the radius of the primary sheave shaft 20c is about 2 mm shorter than those of other components according to this embodiment, and the clearance thus produced between the primary sheave shaft 20c and the collar 49 constitutes the grease reservoir 47. One or plural holes 48 through which the grease reservoir 47 communicates with the outside are formed on the collar 49. The one or plural holes 48 allow the grease reserved in the grease reservoir 47 to be positively supplied to the primary sheave 36 by the centrifugal force generated in accordance with the rotation of the primary sheave 36. In this structure, a large quantity of grease is supplied at the time of high-speed rotation, and thus seizure of components with one another and abrasion of the primary movable sheave 36b, the collar 49 and other components can be effectively prevented. The size and the number of the holes 48 can be appropriately determined based on the grease supply amount.

The forming method of the grease reservoir 47 is not specifically limited. For example, the grease reservoir may be produced by boring the collar 49 (gouging the inner periphery of the collar 49) to expand the inside diameter of the collar 49. Alternatively, the grease reservoir 47 may be created by forming linear grooves extending in the axial direction on the primary sheave shaft 20c. In case of the grease reservoir 47 produced by forming the linear grooves, supply of grease to the grease reservoir 47 is easier than in case of the grease reservoir 47 produced by narrowing a part of the primary sheave shaft 20c to have a radius shorter than those of other components. More specifically, when the grease reservoir 47 is formed by narrowing a part of the primary sheave shaft 20c, the collar 49 attached after grease is applied to the grease reservoir 47 may contact the applied grease at the time of attachment of the collar 49. In this case, there is a possibility that the grease comes out of the grease reservoir 47. However, when the grease reservoir 47 is produced by forming the linear grooves, the collar 49 attached after grease is applied to the grease reservoir 47 does not contact the applied grease at the time of attachment of the collar 49. Thus, the grease does not come out of the grease reservoir 47. In case of the grease reservoir 47 formed by narrowing a part of the primary sheave shaft 20c, grease may be injected through the holes 48.

A cooling fan 46 is provided on the outer surface (right surface in Fig. 2) of the fixed sheave member 36a. A plurality of cam surfaces 42 extending in the radial direction are provided on the left surface of the movable sheave member 36b. The cam plate 60 is disposed on the left side of the movable sheave member 36b at a position opposed to the cam surfaces 42. A plurality of substantially cylindrical (or substantially column-shaped) roller weights (pressing members) 44 which cannot shift in the circumferential direction and can shift in the radial direction are provided in a space sectioned between the cam plate 60 and the cam surfaces 42. The cam surfaces 42 are tapered in such a manner as to radially extend from the center toward the outside while approaching the cam plate 60. The cam plate 60 is similarly tapered in such a manner as to radially extend from the center toward the outside while approaching the can surfaces 42. Thus, the width between the cam plate 60 and the cam surfaces 42 decreases toward the outside in the radial direction.

The secondary sheave 37 has a fixed sheave member 37a and a movable sheave member 37b positioned outside the fixed sheave member 37a in the vehicle width direction at a position opposed to the fixed sheave member 37a. The fixed sheave member 37a fixed to the secondary sheave shaft 38 radially extends toward the outside while approaching the inside (left side) in the vehicle width direction. The fixed sheave member 37a rotates with the secondary sheave member 38. The movable sheave member 37b fixed to the secondary sheave shaft 38 radially extends toward the outside while approaching the outside (right side) in the vehicle width direction. The movable sheave member 37b is attached such that the movable sheave member 37b cannot rotate relative to the secondary sheave shaft 38 and can slide in the axial direction. In this structure, a substantially V-shaped belt groove 37c in the cross-sectional view around which the belt 41 is wound is formed by the fixed sheave member 37a and the movable sheave member 37b, and the width of the belt groove 37c is varied by changing the position of the movable sheave member 37b relative to the position of the fixed sheave member 37a. The shaft center of the movable sheave member 37b is constituted by a cylindrical slide collar, and engages with the secondary sheave shaft 38 by spline engagement.

A compressing coil spring 45 is disposed on the outside (right side) of the movable sheave member 37b in the vehicle width direction. The compressing coil spring 45 urges the movable sheave member 37b toward the fixed sheave member 37a. This structure allows the width of the belt groove 37c to be the minimum at the time of low speed revolution of the engine such as under the idling condition.

The CVT 14 determines the speed change ratio based on the ratio of the force of the roller weights 44 for pressing the primary movable sheave member 36b toward the primary fixed sheave member 36a (toward the right) to the force of the compressing coil spring 45 for urging the secondary movable sheave member 37b toward the secondary fixed sheave member 37a (toward the left).

More specifically, when the rotation speed of the primary sheave shaft 20c is low, the width of the belt groove 37c of the secondary sheave 37 is reduced by the urging force of the compressing coil spring 45 (see the condition of the secondary sheave 37 shown above the secondary sheave shaft 38 (maximum speed change ratio position) in Fig. 2). In this condition, the belt winding diameter of the secondary sheave 37 increases, and the belt 41 is pulled toward the secondary sheave 37. Thus, the primary movable sheave member 36b is pressed toward the cam plate 60 by the belt 41, and the width of the belt groove 36c of the primary sheave 36 expands (see the condition of the primary sheave 36 shown below the primary sheave shaft 20c (maximum speed change ratio condition) in Fig. 2). As a result, the speed change ratio increases.

On the other hand, when the rotation speed of the primary sheave shaft 20c becomes high, the roller weights 44 shift toward the outside in the radial direction by receiving centrifugal force. Since the distance between the primary movable sheave member 36b and the cam plate 60 is narrowed toward the radially outside, the primary sheave member 36b is pressed toward the primary fixed sheave member 36a (toward the right) by the shift of the roller weights 44 to the outside in the radial direction. Then, the primary movable sheave member 36b slides toward the primary fixed sheave member 36a, and the width of the belt groove 36c decreases (see the condition of the primary sheave 36 shown above the primary sheave shaft 20c (minimum speed change ratio position) in Fig. 2). In this condition, the belt winding diameter of the primary sheave 36 increases, and the belt 41 is pulled toward the primary sheave 36. Thus, the belt 41 presses the secondary movable sheave member 37b in the direction away from the secondary fixed sheave member 37a (to the right) against the urging force of the compressing coil spring 45. As a result, the secondary movable sheave member 37b slides in the direction away from the secondary fixed sheave member 37a, and the belt winding diameter of the secondary sheave 37decreases (see the condition of the secondary sheave 37 shown below the secondary sheave shaft 38 (minimum speed change ratio condition) in Fig. 2). As a result, the speed change ratio decreases.

The materials of the primary fixed sheave member 36a, the primary movable sheave member 36b, the secondary fixed sheave member 37a, the secondary movable sheave member 37b, and the camplate 60 are not specifically limited. For example, these materials may be metals such as iron, aluminum, and stainless steel. The surfaces of these components may be processed by chrome plating or other processing.

The roller weights 44 change the distance between the cam surfaces 42 and the cam plate 60 by shifting in the radially inside to outside direction, and thus may be of any types as long as they can shift in the radially inside to outside direction. For example, the roller weights 44 may be spherical, straw-bag-shaped, or have other shapes. Also, the roller weights 44 may shift while rotating, or just slide.

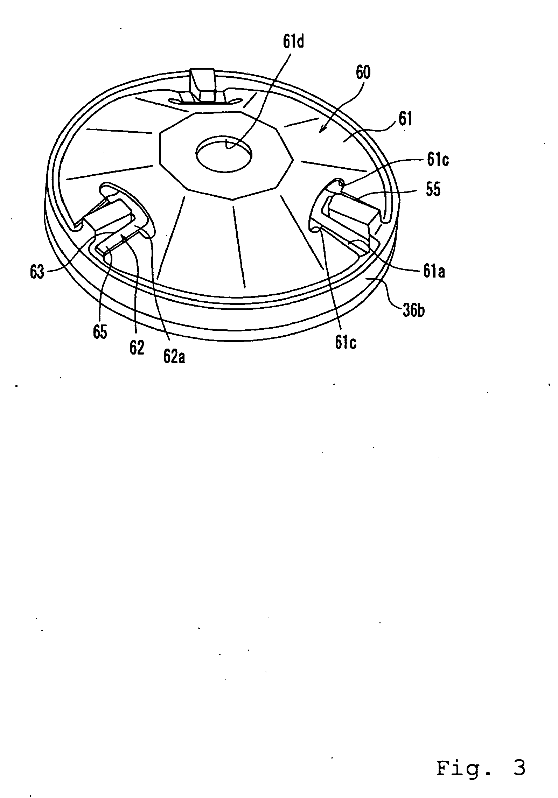

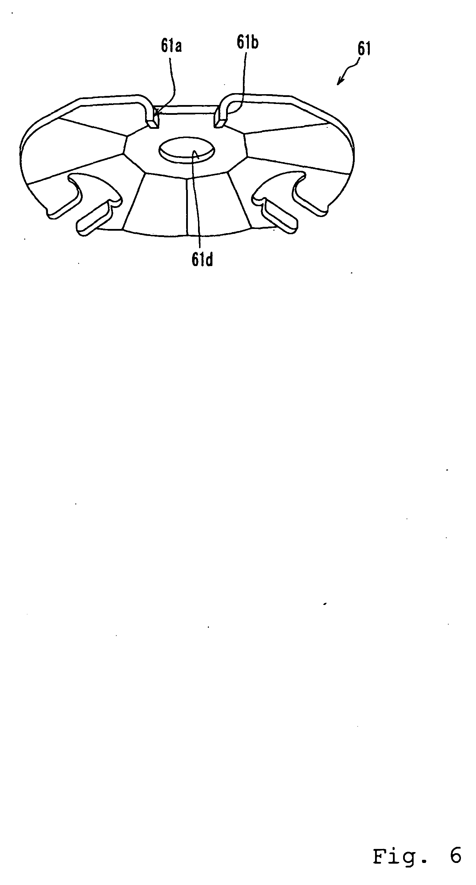

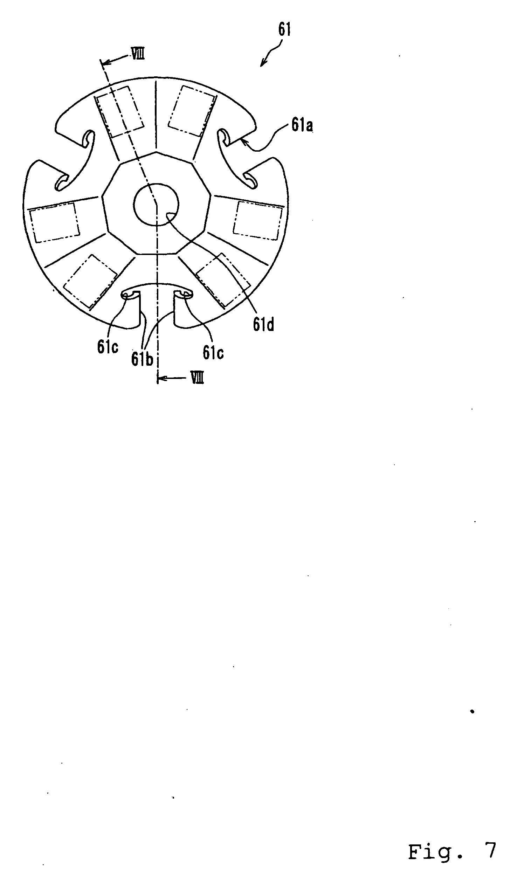

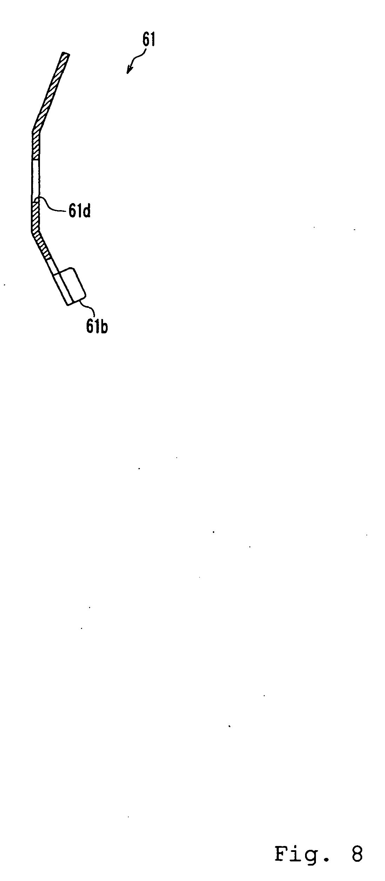

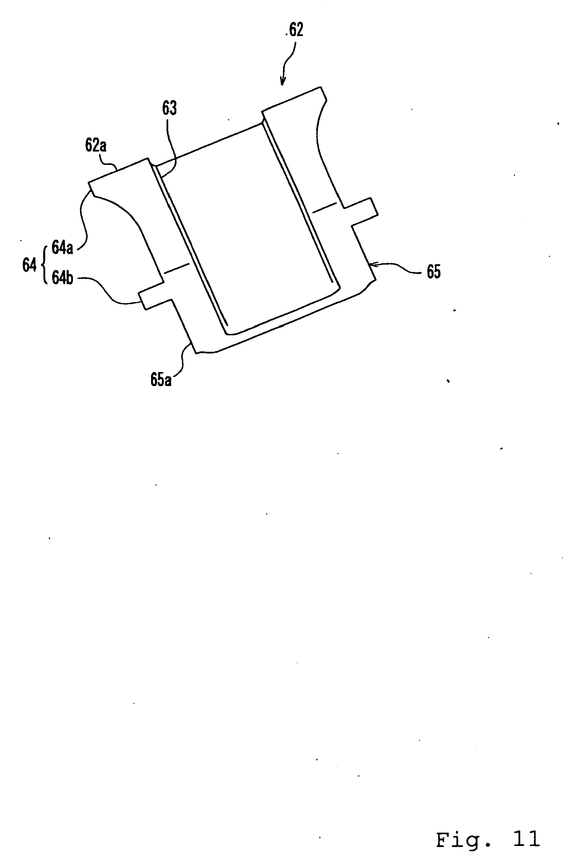

The structure of the primary sheave 36, more specifically, the structures of the primary sheave member 36b and the cam plate 60 according to this embodiment are now described in more detail with reference to Figs. 3 through 12.

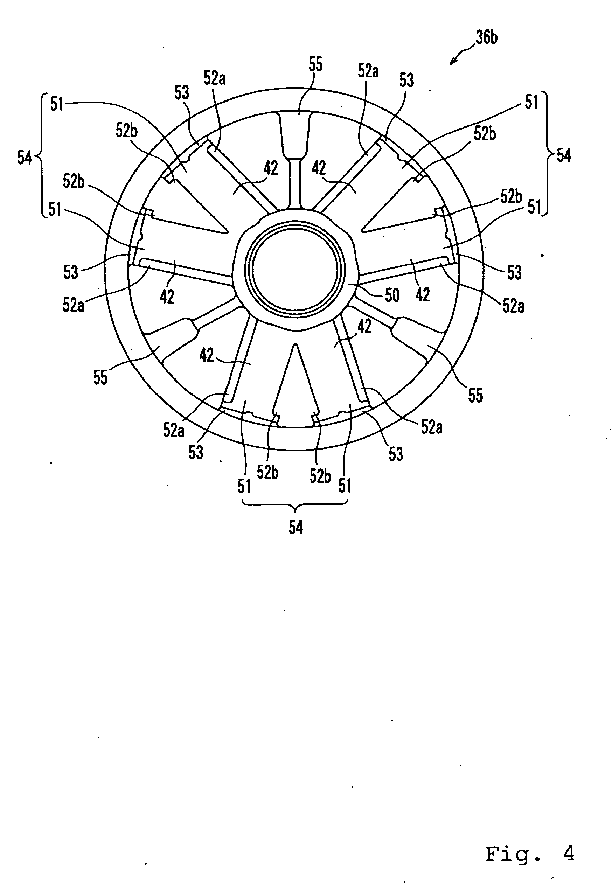

Initially, the structure of the primary movable sheave member 36b is explained with reference to Fig. 4. A plurality of guide grooves 51 on which the corresponding roller weights 44 are disposed are formed on the back surface of the primary movable sheave member 36b. More specifically, the six guide grooves 51 radially extend from a boss 50 toward the outside in the radial direction. Further specifically, each adjoining pair of the six guide grooves 51 disposed to form a V shape constitute one pair of three guide groove pairs 54, and these three guide groove pairs 54 are provided at substantially equal intervals around the boss 50.

Each of the guide grooves 51 has the cam surface 42 and a pair of guide walls 52a and 52b. As illustrated in Fig. 2, the cam surface 42 radially extends toward the outside while inclined toward the cam plate 60. As illustrated in Fig. 4, each of the guide walls 52a and 52b projects from the end side of the cam surface 42 in such a direction as to face each other in parallel, and radially extends along the end side of the cam surface 42. The distance between the guide wall 52a and the guide wall 52b is set substantially at the same length as the height of the roller weight 44, and the roller weight 44 moves in the guide groove 51 along the guide walls 52a and 52b in the radial direction of the primary movable sheave member 36b.

A stopper 53 projecting from the cam surface 42 toward the cam plate 60 is provided on the outer end of each of the guide grooves 51 in the radial direction (see Fig. 2 as well). This stopper 53 determines the radially outer end of the movable area of the roller weight 44. Thus, the stopper 53 regulates further shift of the roller weight 44 toward the radially outside by contacting the outer circumferential surface of the roller weight 44 when the primary sheave member 36b reaches the minimum speed change ratio position where the primary movable sheave member 36b reduces the width of the belt groove 36c to the minimum.

Guide ribs (guide members) 55 each of which is disposed between the guide groove pair 54 and projects from the surface of the primary movable sheave member 36b on the cam plate side toward the cam plate 60 in the axial direction (vertical direction with respect to the sheet surface of Fig. 4) are provided at equal intervals in the circumferential direction of the primary movable sheave member 36b. Each of the guide ribs 55 extends from the outer circumference of the cam plate side surface of the primary movable sheave member 36b toward the inside in the radial direction. The guide ribs 55 engage with guide grooves 63 of the cam plate 60 as will be described later such that the guide ribs 55 can slide therein. The primary movable sheave member 36b is guided in the axial direction by the sliding of the guide ribs 55 in the guide grooves 63.

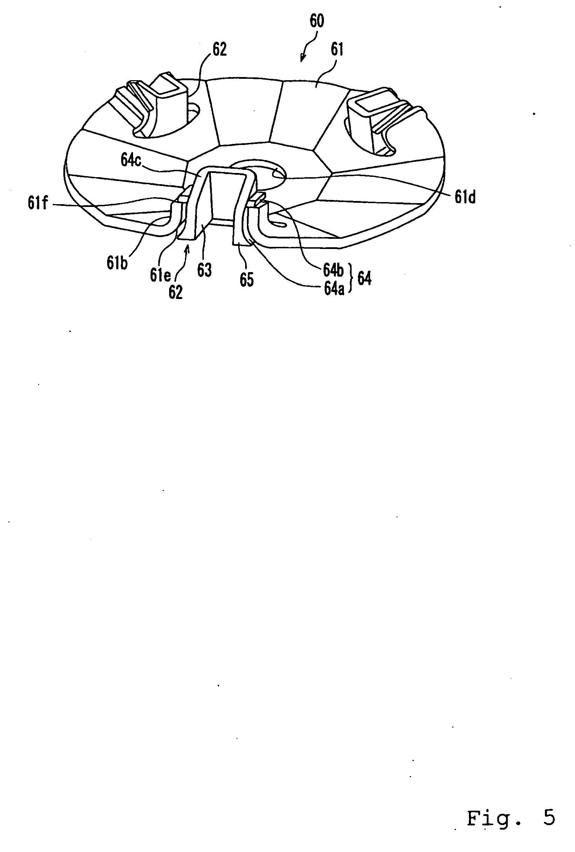

As illustrated in Figs. 3 and 5, the cam plate 60 has a plate main body 61 made of metal (such as iron), and a plurality of sliders (slide members) 62 made of resin (such as 4-6 nylon) or other materials. More specifically, the plural sliders 62 are provided on the outer circumferential portion of the substantially circular plate main body 61 in the plan view at equal intervals along the outer circumference in the circumferential direction.

An open hole 61d through which the primary sheave shaft 20c is inserted is formed at the center of the plate main body 61. The plate main body 61 has a tapered shape expanding from the center where the open hole 61d is formed toward the primary movable sheave member 36b (see Figs. 2 and 6 through 8 as well). A notch 61a is formed on the plate main body 61 at a position corresponding to each position of the guide ribs 55. More specifically, the substantially rectangular three notches 61a in the plan view are formed on the outer circumferential portion of the plate main body 61 at equal intervals. For the areas where the notches 61a are formed, deep drawing is not performed. In other words, the notches 61a are substantially leveled with other portions of the plate main body 61, and walls projecting in the axial direction are not provided radially inside the notches 61a.

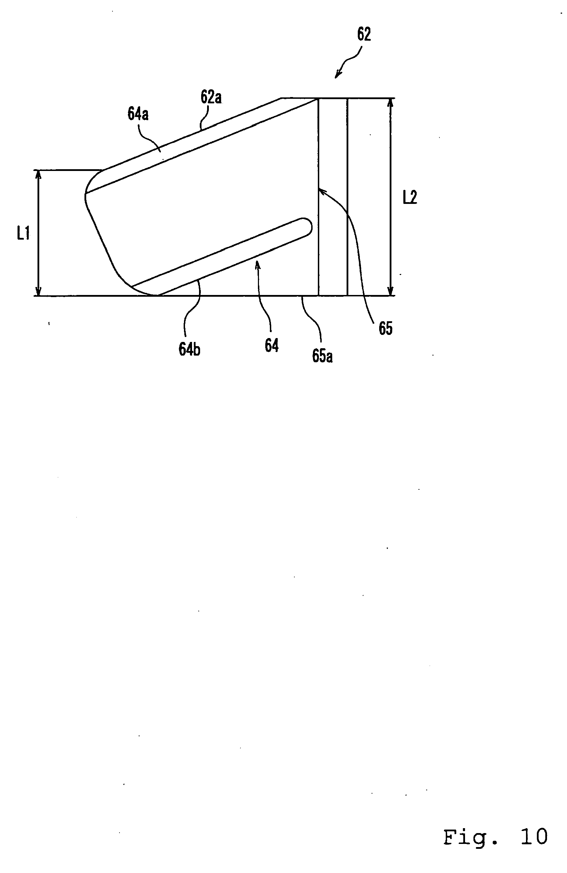

As illustrated in Fig. 5, the sliders 62 are disposed on the corresponding notches 61a. As discussed above, deep drawing is not performed for the notches 61a to which the corresponding sliders 62 are attached. Thus, as illustrated in Figs. 3 and 10, the radially outside portions of inside end surfaces 62a of the sliders 62 in the vehicle width direction are positioned outside the radially inside portions thereof in the vehicle width direction. More specifically, the surfaces 62a are formed on inclined surfaces extending toward the outside in the radial direction while inclined toward the outside in the vehicle width direction.

The guide groove (sliding grooves) 63 is formed on each of the sliders 62. The guide ribs 55 engage with the corresponding guide grooves 63 such that the guide ribs 55 can slide therein, and thus rotation of the cam plate 60 relative to the primary movable sheave member 36b is prevented. Since the primary movable sheave member 36b is attached to the primary sheave shaft 20c such that the primary movable sheave member 36b cannot rotate as discussed above, the cam plate 60 rotates with the primary movable sheave member 36b by the rotation of the primary sheave shaft 20c. Concerning the axial direction of the primary sheave 36, the cam plate 60 is attached to the primary sheave shaft 20c such that the cam plate 60 cannot shift in the axial direction of the primary sheave member 20c. Thus, the position of the cam plate 60 relative to the primary fixed sheave member 36a cannot be varied in the axial direction, but the position of the cam plate 60 relative to the primary movable sheave member 36b can be varied in the axial direction.

Notches 61c extending in the circumferential direction are formed at both radially inside corners of each of the notches 61a. The respective ends of each notch 61a extending inside to outside in the radial direction are bended toward the primary movable sheave member 36b in the axial direction. The bended portions 61b thus produced allow the sliders 62 to be attached to the plate main body 61 such that the sliders 62 cannot move in the axial direction.

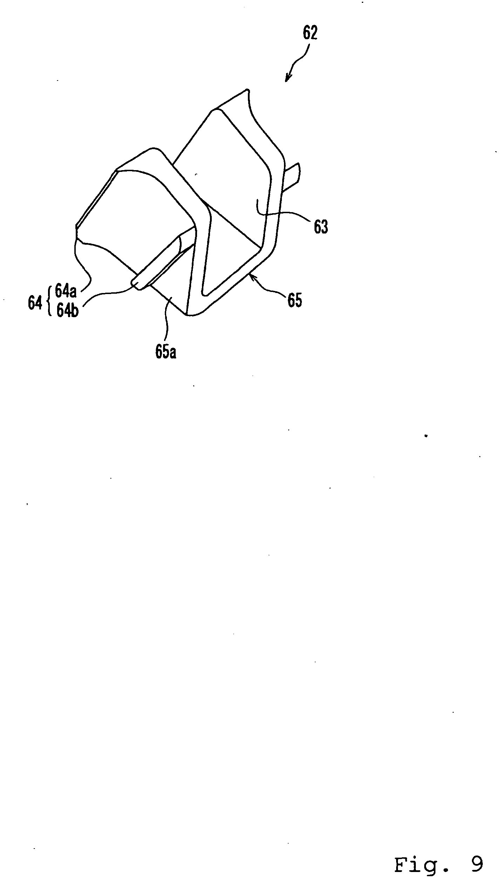

More specifically, as illustrated in Figs. 9 through 11, each of the sliders 62 has a slider main body 65 having the guide groove 63 and an engaging portion 64 formed on the outer surface of the slider main body 65. The engagement between the engaging portion 64 and the bended portion 61b regulates the position change of the slider 62 relative to the plate main body 61 in the axial direction.

More specifically, each of the engaging portions 64 has a first linear convex 64a and a second linear convex 64b extending along the plate main body 61 in a direction in parallel with the extending direction of the plate main body 61 and inclined to the axial direction. The first linear convex 64a is provided at one end of the outer surface of the slider main body 65 along the end side. The side surface of the first linear convex 64a on the primary movable sheave member 36b side has a curved surface corresponding to the shape of a bend 61e of the bended portion 61b, and contacts the bend 61e by surface contact. The side surface of the first linear convex 64a on the side opposite to the primary movable sheave member 36b is leveled with the end surface of the slider main body 65. Thus, the end surface 62a of the slider 62 is substantially leveled with the tapered surface of the plate main body 61 on the side opposite to the primary movable sheave member 36b. The guide grooves 63 extend from the area where the guide grooves 63 are substantially leveled with the tapered surface of the plate main body 61 on the side opposite to the primary movable sheave member 36b toward the primary movable sheave member 36b.

The second linear convex 64b is located at a position slightly shifted to the other end of the outer surface of the slider main body 65 from the center thereof. The side surface of the second linear convex 64b on the side opposite to the primary movable sheave member 36b contacts an end surface 61f of the bended portion 61b. It is preferable that the first linear convex 64a and the second linear convex 64b are disposed in parallel with each other in view of attachment and detachment easiness of the slider 62.

As illustrated in Fig. 10, the slider 62 has a substantially trapezoidal shape in the side view having an axial length L1 of the radially outside portion of the slider 62 smaller than an axial length L2 of the radially inside portion of the slider 62. In other words, the radially inside area of the slider main body 65 further extends from the portion where the second linear convex 64b is provided toward the primary movable sheave member 36b. Thus, an extension 65a which extends from a position shifted toward the primary movable sheave member 36b from the second linear convex 64b is formed on the slider main body 65.

Since the radially outside portion of the end surface 62a of the slider 62 is positioned outside the radially inside portion thereof in the vehicle width direction, the length of the engaging portion between the cam plate 60 and the guide rib 55 in the extending direction of the cam plate 60 becomes relatively large. More specifically, since the end surface 62a of the slider 62 is an inclined surface extending toward the outside in the radial direction while inclined toward the outside in the vehicle width direction, the length of the engaging portion between the cam plate 60 and the guide rib 55 in the extending direction of the cam plate 60 becomes relatively large.

More specifically, as illustrated in Fig. 12, the end surface 62a is tapered according to this embodiment, and therefore a length L3 of the engaging portion between the cam plate 60 and the guide rib 55 in the extending direction of the cam plate 60 (see Fig. 12(a)) can be made larger than a corresponding length L4 in the related-art structure where the portion processed by deep drawing for attachment of the slider 162 of the plate main body 161 crosses the axial direction at right angles (see Fig. 12(b)). Accordingly, the guide groove 63 and the guide rib 55 engage more rigidly with each other, and the primary movable sheave member 36b more smoothly and stably slides relative to the cam plate 60.

Since the radially outside portion of the end surface 62a of the slider 62 is positioned outside the radially inside portion of the end surface 62a in the vehicle width direction, the need for deep drawing of the plate main body 61 is eliminated. Thus, cost is lowered, and the necessity for the complicated and difficult deep drawing for the plate main body 61 is eliminated. Accordingly, the cam plate 60 can be manufactured more easily at lower cost than the cam plate having the structure which requires deep drawing as in the related art. Particularly, the life of a mold (metal mold) used for forming the cam plate 60 is prolonged, and the cost for molding the cam plate 60 is reduced. As a result, the belt type continuously variable transmission 14 which is easily manufactured at low cost, and the motorcycle 1 which is thus easily manufactured at low cost, can be obtained.

According to the plate main body 161 in the related art for which deep drawing is performed, the slider 162 needs to be attached at a position away from the boss by an amount corresponding to the deep drawing. In this case, it is difficult to increase the length of the slider 162 in the radial direction sufficient to extend a further inside portion in the radial direction. According to this embodiment, however, the length of the slider 62 which does not require deep drawing can be increased in the radial direction enough to reach a further inside portion in the radial direction. That is, since the plate main body 61 does not require deep drawing, the length L3 of the engaging portion between the cam plate 60 and the guide rib 55 in the extending direction of the cam plate 60 is increased. Thus, the guide groove 63 and the guide rib 55 engage with each other more rigidly, and the primary movable sheave member 36b can more smoothly and stably slide relative to the cam plate 60. Moreover, since the contact area between the slider 62 and the guide rib 55 is relatively large, the surface pressure applied to the slider 62 is relatively low. As a result, the durability of the slider 62 made of material having relatively low hardness can be increased.

According to this embodiment, the guide groove 63 extends from its portion substantially leveled with the tapered surface of the plate main body 61 toward the primary movable sheave member 36b. Thus, a large contact area between the guide groove 63 and the guide rib 55 is secured. Accordingly, the engagement between the guide groove 63 and the guide rib 55 becomes especially rigid, and the sliding of the primary movable sheave member 36b relative to the cam plate 60 is considerably stabilized. Moreover, according to this structure, the contact area between the slider 62 and the guide rib 55 can be particularly enlarged. Thus, the durability of the slider 62 made of material having relatively low hardness can be further improved.

The slider 62 is fixed to the plate main body 61 by the engagement between the engaging portion 64 and the bended portion 61b formed by bending each end of the notch 61a extending inside to outside in the radial direction. More specifically, the slider 62 is attached to the plate main body 61 by the surface contact between the surface of the bended portion 61b and the side of the slider 62 under the condition where the engaging portion 64 contacting the bend 61e and the end surface 61f pinches the bended portion in the axial direction. Thus, the large contact area between the slider 62 and the plate main body 61 is secured, and the slider 62 is rigidly fixed to the plate main body 61 according to this embodiment. In addition, the surface pressure of the contact surface between the plate main body 61 and the slider 62 is relatively low. Accordingly, durability of the slider 62 made of material having relatively low hardness such as resin can be increased. For further improvement over durability of the slider 62, a protection member (such as metal) which contacts the slider 62 with a contact area larger than the contact area between the slider 62 and the plate main body 61 may be interposed between the slider 62 and the plate main body 61.

According to this embodiment discussed above, the guide groove 63 extends from its portion substantially leveled with the tapered surface of the plate main body 61 toward the primary movable sheave member 36b. Thus, as illustrated in Fig. 12(c), a sufficient engagement area between the guide rib 55 and the guide groove 63 is secured even when the plate main body 61 shifts further upward from the radially inner end of the guide rib 55 in Fig. 12(c) (more specifically, in the direction away from the surface of the primary movable sheave member 36b opposed to the cam plate 60). That is, since the guide groove 63 extends from the plate main body 61 toward the primary movable sheave member 36b as illustrated in Figs. 12(c) and 12(d), a large shift range of the primary movable sheave member 36b relative to the cam plate 60, which range is equivalent to that of the related-art structure using deep drawing shown in Fig. 12(d), can be secured.

Particularly, as illustrated in Fig. 12(a), the contact area between the guide groove 63 and the guide rib 55 under the condition where the primary movable sheave member 36b is away from the cam plate 60 can be enlarged by forming the slider main body 65 which has a substantially trapezoidal shape in the side view having the length L2 of the radially inner portion in the axial direction longer than the length L1 of the radially outer portion thereof, that is, by forming the extension 65a which extends from a position shifted toward the primary movable sheave member 36b from the second linear convex 64b. In this case, the length of the guide rib 55 in the axial direction becomes relatively short, and a comparatively wide shift range of the primary movable sheave member 36b relative to the cam plate 60 in the axial direction is secured. Accordingly, the primary sheave 36 can be made compact and thin. In other words, the CVT 14 provided according to this embodiment can vary the speed ratio relatively largely.

According to this embodiment, the engaging portion 64 is disposed along the end side of the outer side of the slider main body 65 on the side opposite to the primary movable sheave member 36b as illustrated in Fig. 9 and other figures. Thus, the upper end surface of the slider 62 is substantially leveled with the tapered surface of the cam plate 60. That is, the slider 62 does not project toward the side opposite to the primary movable sheave member 36b from the tapered surface of the cam plate 60. Thus, as illustrated in Fig 2, the positional interference between the inside case 31a of the transmission case 31 and the slider 62 is prevented. Accordingly, the CVT 14 provided according to this embodiment can be made further compact.

According to this embodiment, the bends 61e are formed by bending the respective ends of the notch 61a extending inside to outside in the radial direction, and the first linear convex 64a is provided such that the side of the first linear convex 64a on the primary movable sheave member 36b side has a curved surface corresponding to the shape of the bend 61e of the bended portion 61b. Thus, projection of the slider 62 toward the side opposite to the primary movable sheave member 36b with respect to the axial direction from the tapered surface of the cam plate 60 is effectively prevented. This advantage is particularly preferable in view of miniaturization of the CVT 14.

The following modifications and changes may be given to the structure according to the preferred embodiment of the invention described above. The plate main body 61 and the slider (slide member) 62 may be formed integrally with each other. However, when the shape of the slider 62 is particularly complicated, it is preferable that the plate main body 61 and the slider 62 are provided separately from each other in view of easiness in manufacture.

According to this embodiment, the primary sheave 36 has the primary fixed sheave member 36a and the primary movable sheave member 36b. However, the primary sheave 36 may have two primary movable sheave members disposed opposed to each other. More specifically, additional cam plate and pressing member may be provided on the right side of the primary fixed sheave member 36a such that the primary fixed sheave member 36a can be shifted in the axial direction of the primary sheave shaft 20c in accordance with the shift of the pressing member.

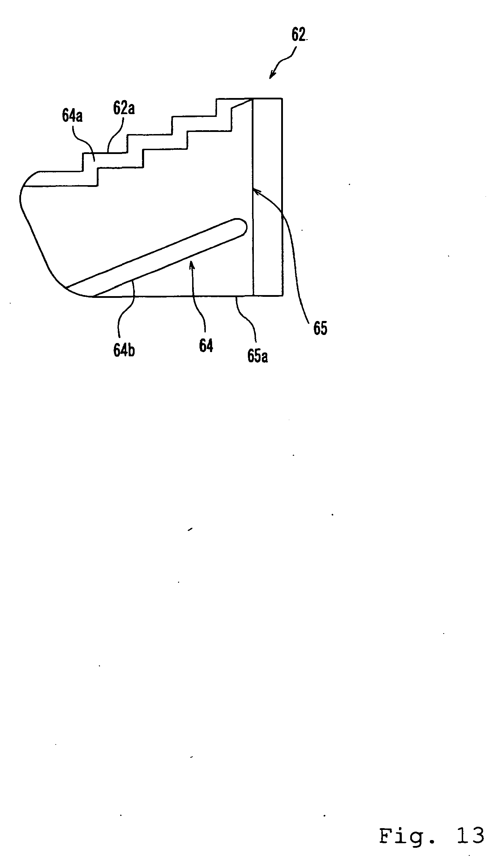

According to this embodiment, the end surface 62a of the inner portion of the slider 62 in the vehicle width direction extends toward the radially outside while inclined toward the outside in the vehicle width direction. However, the end surface 62a need not have such an inclined surface as long as the radially outer portion of the end surface 62a is positioned outside the radially inner portion thereof in the vehicle width direction. For example, the end surface 62a may have a stepwise shape in the side view as illustrated in Fig. 13.

The straddle-type vehicle according to the invention is not limited to the off-road-type motorcycle discussed in this embodiment, but may be a motorcycle of types other than the off-road type (such as motorcycle type, motor-scooter type, so-called moped type, and other types of motorcycle). The invention is also applicable to a straddle-type vehicle other than a motorcycle (such as ATV: all terrain vehicle).

The description "the end surface 62a and the inside surface of the plate main body 61 in the vehicle width direction are leveled with each other" in this specification includes the condition where the end surface 62a and the inside surface of the plate main body 61 in the vehicle width direction are shifted from each other to such an extent that no problem occurs in practical use as well as the condition where the end surface 62a and the inside surface of the plate main body 61 in the vehicle width direction are perfectly leveled with each other.

The invention finds application to a straddle-type vehicle having a belt-type continuously variable transmission.

### DESCRIPTION OF REFERENCE NUMERALS AND SIGNS

- 1: motorcycle
- 12: engine unit
- 13: engine
- 14: belt type continuously variable transmission (CVT)
- 20: crank shaft
- 20c: primary sheave shaft
- 36: primary sheave
- 36a: primary fixed sheave member
- 36b: primary movable sheave member
- 37: secondary sheave
- 41: belt
- 42: cam surface
- 44: roller weight
- 51: guide groove
- 53: stopper
- 55: guide rib
- 60: cam plate
- 61: plate main body
- 61a: notch
- 61b: bended portion
- 62: slider
- 62a: end surface
- 63: guide groove
- 64: engaging portion
- 65: slider main body
- 65a: extension

## Claims

1. A belt-type continuously variable transmission (14), comprising:
a primary sheave (36) which rotates around a rotation axis;
a secondary sheave (37); and
a belt (41) wound around the primary sheave (36) and the secondary sheave (37),
wherein
the primary sheave (36) includes
a first sheave member (36b) which can move in the direction of the rotation axis,
a second sheave member (36a) which is offset from, and disposed at a position to one side of, the first sheave member (36b) along the rotation axis such that the second sheave member (36a) is opposed to the first sheave member (36b), the first sheave member (36b) and the second sheave member (36a) forming a belt groove (36c) around which the belt (41) is wound,
a cam plate (60) which is offset from, and disposed at a position to the other side of, the first sheave member (36b) along the rotation axis such that the cam plate (60) is opposed to the first sheave member (36b), the cam plate (60) and the first sheave member (36b) producing a space which narrows toward the radially outer portion of the first sheave member (36b), and
a pressing member (44) which is disposed in the space to narrow the width of the belt groove (36c) by moving toward the radially outer portion of the first sheave member (36b) while pressing the first sheave member (36b) against the second sheave member (36a) by centrifugal force generated by circling of the pressing member (44) around the rotation axis in accordance with the rotation of the first sheave member (36b),
the first sheave member (36b) has a guide member (55) extending toward the cam plate (60),
the cam plate (60) has a slide member (62) circumferentially spaced from the pressing member (44) and having a guide groove (63) engaging with the guide member (55) such that the slide member (62) can slide relative to the guide member (55), and a main body (61) of the cam plate (60) having a notch (61a) on which the slide member (62) is provided, the slide member (62) being provided separately from the main body (61) of the plate, and
the pressing member (44) is disposed circumferentially spaced from the guide member (55),
**characterized in that**
a radially outer portion of the end surface (62a) of the slide member (62) facing away from the first sheave member (36b) is located further towards the first sheave member (36b) in the direction of the rotation axis than a radially inner portion thereof; and
a portion of the notch (61a) engaging with an engaging portion (64) of the slide member (62) is bent in the rotation axis direction.

2. The belt-type continuously variable transmission according to claim 1, wherein:
the slide member (62) has a main body (65) having the guide groove (63), the engaging portion (64) being formed on the outer side of the main body (65) of the side member to engage with the notch (61a) of the main body (65) of the plate and to regulate the shift of the main body (65) of the slide member in the rotation axis direction relative to the main body (61) of the plate.

3. The belt-type continuously variable transmission according to claim 1 or 2, wherein the engaging portion (64) has a linear shape extending along the plate main body (61) while inclined to the rotation axis direction.

4. The belt-type continuously variable transmission according to any preceding claim, wherein
the end surface (62a) of the slide member (62) is leveled with the surface of the main body (61) of the plate on the other side facing away from the first sheave member (36b).

5. The belt-type continuously variable transmission according to any preceding claim, wherein the slide member (62) has a substantially trapezoidal shape in the side view having the radially outer portion shorter than the radially inner portion in the rotation axis direction.

6. A straddle-type vehicle, such as a motorcycle, motor-scooter, moped or all-terrain vehicle, including the belt-type continuously variable transmission according to any preceding claim.

## Patentansprüche

1. Ein stufenloses Getriebe vom Riementyp (14), das folgende Merkmale aufweist:
eine Hauptseilscheibe (36), die sich um eine Rotationsachse dreht;
eine Nebenseilscheibe (37); und
einen Riemen (41), der um die Hauptseilscheibe (36) und die Nebenseilscheibe (37) gewickelt ist,
wobei
die Hauptseilscheibe (36) folgende Merkmale umfasst:
ein erstes Seilscheibenbauglied (36b), das sich in die Richtung der Rotationsachse bewegen kann,
ein zweites Seilscheibenbauglied (36a), das entlang der Rotationsachse von dem ersten Seilscheibenbauglied (36b) versetzt und in einer Position zu einer Seite desselben angeordnet ist, derart, dass das zweite Seilscheibenbauglied (36a) dem ersten Seilscheibenbauglied (36b) gegenüberliegt, wobei das erste Seilscheibenbauglied (36b) und das zweite Seilscheibenbauglied (36a) eine Riemenrille (36c) bilden, um die der Riemen (41) gewickelt wird,
eine Nockenscheibe (60), die entlang der Rotationsachse von dem ersten Seilscheibenbauglied (36b) versetzt und in einer Position zur anderen Seite desselben angeordnet ist, derart, dass die Nockenscheibe (60) dem ersten Seilscheibenbauglied (36b) gegenüberliegt, wobei die Nockenscheibe (60) und das erste Seilscheibenbauglied (36b) einen Raum erzeugen, der sich zu dem radial äußeren Abschnitt des ersten Seilscheibenbauglieds (36b) hin verschmälert, und
ein Pressbauglied (44), das in dem Raum angeordnet ist, um die Breite der Riemenrille (36c) verschmälern, indem es sich auf den radial äußeren Abschnitt des ersten Seilscheibenbauglieds (36b) zubewegt und dabei das erste.
Seilscheibenbauglied (36b) anhand einer Zentrifugalkraft gegen das zweite Seilscheibenbauglied (36a) drückt, die erzeugt wird, indem das Pressbauglied (44) gemäß der Rotation des ersten Seilscheibenbauglieds (36b) um die Rotationsachse kreist,
das erste Seilscheibenbauglied (36b) ein Führungsbauglied (55) aufweist, das sich zu der Nockenscheibe (60) hin erstreckt,
die Nockenscheibe (60) ein Schiebebauglied (62) aufweist, das bezüglich des Umfangs von dem Pressbauglied (44) beabstandet ist und eine Führungsrille (63) aufweist, die derart mit dem Führungsbauglied (55) in Eingriff gelangt, dass das Schiebebauglied (62) relativ zu dem Führungsbauglied (55) verschoben werden kann, und ein Hauptkörper (61) der Nockenscheibe (60) weist eine Kerbe (61a) auf, auf der das Schiebebauglied (62) vorgesehen ist, wobei das Schiebebauglied (62) separat von dem Hauptkörper (61) der Scheibe vorgesehen ist; und
das Pressbauglied (44) bezüglich des Umfangs von dem Führungsbauglied (55) beabstandet angeordnet ist,
**dadurch gekennzeichnet, dass**
ein radial äußerer Abschnitt der Endoberfläche (62a) des Schiebebauglieds (62), die von dem ersten Seilscheibenbauglied (36b) abgewandt ist, in der Richtung der Rotationsachse näher in Richtung des ersten Seilscheibenbauglieds (36b) angeordnet ist als ein radial innerer Abschnitt derselben; und
ein Abschnitt der Kerbe (61a), die mit einem Ineingriffnahmeabschnitt (64) des Schiebebauglieds (62) in Eingriff steht, in der Richtung der Rotationsachse gebogen wird.

2. Das stufenloses Getriebe vom Riementyp gemäß Anspruch 1, bei dem:
das Schiebebauglied (62) einen Hauptkörper (65) aufweist, der die Führungsrille (63) aufweist, wobei der Ineingriffnahmeabschnitt (64) auf der Außenseite des Hauptkörpers (65) des Schiebebauglieds gebildet ist, um mit der Kerbe (61a) des Hauptkörpers (61) der Platte in Eingriff zu gelangen und um die Verschiebung des Hauptkörpers (65) des Schiebebauglieds in der Richtung der Rotationsachse relativ zu dem Hauptkörper (61) der Scheibe zu regulieren.

3. Das stufenloses Getriebe vom Riementyp gemäß Anspruch 1 oder 2, bei dem der Ineingriffnahmeabschnitt (64) eine lineare Gestalt aufweist, die sich entlang des Scheibenhauptkörpers (61) erstreckt und dabei in die Richtung der Rotationsachse geneigt ist.

4. Das stufenloses Getriebe vom Riementyp gemäß einem der vorhergehenden Ansprüche, bei dem:
die Endoberfläche (62a) des Schiebebauglieds (62) mit der Oberfläche des Hauptkörpers (61) der Scheibe auf der anderen Seite, die von dem ersten Seilscheibenbauglied (36b) abgewandt ist, auf einer Höhe liegt.

5. Das stufenloses Getriebe vom Riementyp gemäß einem der vorhergehenden Ansprüche, bei dem das Schiebebauglied (62) in der Seitenansicht im Wesentlichen eine Trapezform aufweist, bei der der radial äußere Abschnitt in der Richtung der Rotationsachse kürzer ist als der radial innere Abschnitt.

6. Ein Fahrzeug vom rittlings zu fahrenden Typ, beispielsweise ein Motorrad, ein Motorroller, ein Moped oder ein Geländefahrzeug, das das stufenlose Getriebe vom Riementyp gemäß einem der vorhergehenden Ansprüche umfasst.

## Revendications

1. Transmission à variation continue à courroie (14), comprenant:
une roue à gorge primaire (36) qui tourne autour d'un axe de rotation;
une roue à gorge secondaire (37); et
une courroie (41) enroulée autour de la roue à gorge primaire (36) et de la roue à gorge secondaire (37),
dans laquelle
la roue à gorge primaire (36) comporte
un premier élément de roue à gorge (36b) qui peut se déplacer dans la direction de l'axe de rotation,
un deuxième élément de roue à gorge (36a) qui est décalé du, et disposé à une position d'un côté, du premier élément de roue à gorge (36b) le long de l'axe de rotation de sorte que le deuxième élément de roue à gorge (36a) soit opposé au premier élément de roue à gorge (36b), le premier élément de roue à gorge (36b) et le deuxième élément de roue à gorge (36a) formant une gorge à courroie (36c) autour de laquelle est enroulée la courroie (41),
une plaque à came (60) qui est décalée du, et disposée à une position de l'autre côté, du premier élément de roue à gorge (36b) le long de l'axe de rotation de sorte que la plaque à came (60) soit opposée au premier élément de roue à gorge (36b), la plaque à came (60) et le premier élément de roue à gorge (36b) créant un espace qui se rétrécit vers la partie radialement extérieure du premier élément de roue à gorge (36b), et
un élément de pression (44) qui est disposé dans l'espace, pour rétrécir la largeur de la gorge à courroie (36c) en se déplaçant vers la partie radialement extérieure du premier élément de roue à gorge (36b) tout en pressant le premier élément de roue à gorge (36b) contre le deuxième élément de roue à gorge (36a) par une force centrifuge générée en encerclant l'élément de pression (44) autour de l'axe de rotation selon la rotation du premier élément de roue à gorge (36b),
le premier élément de roue à gorge (36b) présente un élément de guidage (55) s'étendant vers la plaque à came (60),
la plaque à came (60) présente un élément de glissement (62) espacé circonférentiellement de l'élément de pression (44) et présentant une gorge de guidage (63) venant en prise avec l'élément de guidage (55) de sorte que l'élément de glissement (62) puisse glisser par rapport à l'élément de guidage (55), et un corps principal (61) de la plaque à came (60) présentant une encoche (61 a) sur laquelle est prévu l'élément de glissement (62), l'élément de glissement (62) étant prévu séparément du corps principal (61) de la plaque, et
l'élément de pression (44) est disposé espacé circonférentiellement de l'élément de guidage (55),
**caractérisée par le fait que**
une partie radialement extérieure de la surface d'extrémité (62a) de l'élément de glissement (62) orientée éloignée du premier élément de roue à gorge (36b) est située plus vers le premier élément de roue à gorge (36b) dans la direction de l'axe de rotation qu'une partie radialement intérieure de cette surface; et
une partie de l'encoche (61 a) venant en prise par une partie de venue en prise (64) de l'élément de glissement (62) est courbée dans la direction de l'axe de rotation.

2. Transmission à variation continue à courroie selon la revendication 1, dans laquelle:
l'élément de glissement (62) présente un corps principal (65) présentant la gorge de guidage (63), la partie de venue en prise (64) étant formée du côté extérieur du corps principal (65) de l'élément de glissement, pour venir en prise avec l'encoche (61 a) du corps principal (61) de la plaque et pour réguler le décalage du corps principal (65) de l'élément de glissement dans la direction de l'axe de rotation par rapport au corps principal (61) de la plaque.

3. Transmission à variation continue à courroie selon la revendication 1 ou 2, dans laquelle la partie de venue en prise (64) présente une forme linéaire s'étendant le long du corps principal de plaque (61) tout en étant inclinée dans la direction de l'axe de rotation.

4. Transmission à variation continue à courroie selon l'une ou l'autre revendication précédente, dans laquelle
la surface d'extrémité (62a) de l'élément de glissement (62) est à niveau avec la surface du corps principal (61) de la plaque de l'autre côté orientée éloignée du premier élément de roue à gorge (36b).

5. Transmission à variation continue à courroie selon l'une ou l'autre revendication précédente, dans laquelle l'élément de glissement (62) présente une forme sensiblement trapézoïdale en vue latérale présentant la partie radialement extérieure plus courte que la partie radialement intérieure dans la direction de l'axe de rotation.

6. Véhicule du type à selle, tel qu'une motocyclette, un scooter, un cyclomoteur ou un véhicule tout terrain, comportant la transmission à variation continue à courroie selon l'une ou l'autre revendication précédente.
